# EUROPEAN PATENT APPLICATION

(11) **EP 4 757 388 A1**
(43) Date of publication of application: **10.06.2026**
(21) Application number: 24867137.2
(22) Date of filing: 07.08.2024
(51) Int. Cl.: H04W 24/02

(54) **COMMUNICATION METHOD, APPARATUS AND SYSTEM**

(30) Priority: 22.09.2023 CN 202311253085
(71) Applicant: HUAWEI TECHNOLOGIES CO., LTD., Shenzhen 518129 (CN)
(72) Inventor: ZHANG, Zhiqin, Shenzhen, Guangdong 518129 (CN); FENG, Zhao, Shenzhen, Guangdong 518129 (CN); WANG, Yuan, Shenzhen, Guangdong 518129 (CN)
(74) Representative: Grünecker Patent- und Rechtsanwälte PartG mbB
(86) International application number: PCT/CN2024/110441
(87) International publication number: WO 2025/060720

(57) **Abstract**

This application provides a communication method, apparatus, and system, to improve reliability of a communication network. The method may be executed by a network data analytics function network element. The method includes: receiving a first request from a first network element, where the first request includes a first identifier of a target network element; and sending a first response to the first network element, where the first response includes analytics information of a message that is received by the target network element and/or analytics information of a message that is sent by the target network element.

## Description

### CROSS-REFERENCE TO RELATED APPLICATIONS

This application claims priority to Chinese Patent Application No. 202311253085.X, filed with the China National Intellectual Property Administration on September 22, 2023, and entitled "COMMUNICATION METHOD, APPARATUS, AND SYSTEM", which is incorporated herein by reference in its entirety.

### TECHNICAL FIELD

This application relates to the field of communication technologies, and in particular, to a communication method, apparatus, and system.

### BACKGROUND

With development of communication technologies, there are more network elements in a communication network in terms of type and number, and user terminals participating in wireless communication are also increasing. The user terminal may initiate a signaling request to each network element in a wireless communication network, to obtain a network function provided by each network element. However, when a network element receives a large number of request messages, if a processing capability of the network element is insufficient, network congestion may be caused to generate an avalanche effect. As a result, the entire network is unavailable. This phenomenon is referred to as a network signaling storm in the industry.

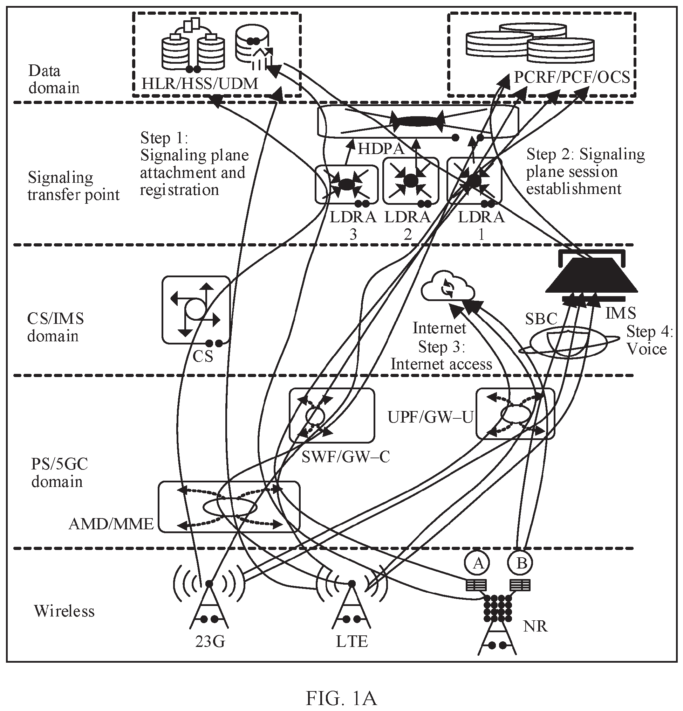

The network signaling storm may occur due to a plurality of reasons. In one case, the network signaling storm is caused by an abnormal user. If a network in an area is faulty and users in this area cannot access the network, the users in this area become abnormal users, and the abnormal users may send request messages to network elements in the network a plurality of times. When the network elements receive a large number of request messages, the network elements may randomly discard some of the received request messages. The randomly discarded request messages may include a registration request message initiated by the abnormal user and an update request message initiated by a normal user. When the update request message of the normal user is discarded, a communication procedure of the normal user may be blocked, and the normal user becomes an abnormal user. In this case, a number of abnormal users in the network increases, and consequently, the network element in the network receives an increasing number of request messages. When the request messages that are received by the network element in the network exceed a message processing capability of the network element, the network signaling storm occurs. As shown in FIG. 1A, in another case, a network signaling storm occurs due to an abnormal path. A device PCF in a data domain is used as an example. After a communication path to the PCF is intermittently disconnected, a UE sends 50,000 pieces of request information to the PCF, and a 50,001^{st} request message is to be sent to the PCF through another path. After the request message arrives at the PCF, as a processing capability of the PCF is already occupied, the PCF may discard the message or returns an error code. As a result, a communication procedure of the another path is also blocked, and the another path also becomes an abnormal path. A number of abnormal paths in a network increases, causing network signaling storms of all paths.

Therefore, how to prevent a network signaling storm to improve reliability of a communication network is an issue that urgently needs to be resolved in this field.

### SUMMARY

This application provides a communication method, apparatus, and system, to improve reliability of a communication network.

According to a first aspect, this application provides a communication method. The method may be executed by a network data analytics function network element. The method may include: receiving a first request from a first network element, where the first request includes a first identifier of a target network element; and sending a first response to the first network element, where the first response includes analytics information of a message that is received by the target network element and/or analytics information of a message that is sent by the target network element.

In the foregoing technical solution, the first request received by the network data analytics function network element from the first network element includes the first identifier of the target network element, so that the network data analytics function network element may feed back, to the first network element, the analytics information of the message that is received by the target network element and/or the analytics information of the message that is sent by the target network element. In this way, the first network element may preliminarily determine, based on the analytics information of the message that is received by the target network element and/or the analytics information of the message that is sent by the target network element, a message sending behavior feature of a user equipment and/or a network status (for example, whether signaling congestion occurs, and then determine a probability of a signaling storm occurring on the network), and take a corresponding measure to prevent a network signaling storm, so as to effectively improve reliability of the communication network.

In this embodiment of this application, the analytics information of the message that is received by the target network element includes at least one piece of statistical information. The at least one piece of statistical information may include, for example, at least one of a specific numeric value corresponding to a parameter, a specific numeric value that is corresponding to a parameter and that is within a first numeric value interval, a specific numeric value that is corresponding to a parameter and that is greater than or equal to a first numeric value, or a specific numeric value that is corresponding to a parameter and that is less than or equal to the first numeric value.

In a possible design, the at least one piece of statistical information may include a total number of messages that are received by the target network element and/or a total number of messages that are received by the target network element and that are corresponding to a first message type. In this design, statistical collection is performed on the total number of messages that are received by the target network element, so that the network data analytics function network element or the first network element can determine, based on the total number of messages that are received by the target network element, whether a network signaling storm risk exists in the communication network; and/or statistical collection is performed on the total number of messages that are received by the target network element and that are corresponding to the first message type, so that the network data analytics function network element or the first network element can determine, in a first message type dimension and based on the total number of messages that are received by the target network element and that are corresponding to the first message type, whether the network signaling storm risk exists.

Optionally, the at least one piece of statistical information further includes at least one of the following: a total number of messages that are received by the target network element in a first time period, a total number of messages that are received by the target network element in the first time period and that are corresponding to the first message type, and a total number of devices that initiate, in the first time period, messages that are of the first message type and whose total number is greater than a first number. In this design, statistical collection is performed on the total number of messages that are received by the target network element in the first time period, so that the network data analytics function network element or the first network element can determine, based on the total number of messages that are received by the target network element in the first time period, whether the network signaling storm risk exists in the communication network in the first time period. Alternatively, statistical collection is performed on the total number of messages that are corresponding to the first message type and that are received by the target network element in the first time period, so that the network data analytics function network element or the first network element can determine, in the first message type dimension based on the total number of messages that are corresponding to the first message type and that are received by the target network element, whether the network signaling storm risk exists in the first time period. Alternatively, statistical collection is performed on the total number of devices that initiate, in the first time period, messages that are of the first message type and whose total number is greater than the first number, so that the network data analytics function network element or the first network element can analyze a device having abnormal behavior.

In this embodiment of this application, the analytics information of the message that is sent by the target network element includes at least one piece of statistical information. The at least one piece of statistical information may include, for example, at least one of a specific numeric value corresponding to a parameter, a specific numeric value that is corresponding to a parameter and that is within a first numeric value interval, a specific numeric value that is corresponding to a parameter and that is greater than or equal to a first numeric value, or a specific numeric value that is corresponding to a parameter and that is less than or equal to the first numeric value.

In a possible design, the at least one piece of statistical information includes a total number of messages that are sent by the target network element and/or a total number of messages that are sent by the target network element and that are corresponding to the first message type. In this design, statistical collection is performed on the total number of messages that are sent by the target network element, so that the network data analytics function network element or the first network element can determine, based on the total number of messages that are sent by the target network element, whether the network signaling storm risk exists in the communication network; and/or statistical collection is performed on the total number of messages that are sent by the target network element and that are corresponding to the first message type, so that the network data analytics function network element or the first network element can determine, in a first message type dimension and based on the total number of messages that are sent by the target network element and that are corresponding to the first message type, whether the network signaling storm risk exists.

Optionally, the at least one piece of statistical information further includes at least one of the following: a total number of response messages that are sent by the target network element, a total number of response messages that are sent by the target network element and that are corresponding to the first message type, a reason corresponding to the response message that is sent by the target network element, or a total number of response messages that are sent by the target network element and that are corresponding to a first reason. In this design, the analytics information of the message that is sent by the target network element further includes statistical information related to the response messages that are sent by the target network element, so that the network data analytics function network element or the first network element can determine, based on the statistical information related to the response messages that are sent by the target network element, whether the network signaling storm risk exists in the communication network.

In a possible design, the first response further includes at least one of the following: a type of the target network element, an instance identifier of the target network element, or CPU usage of the target network element. The type of the target network element, the instance identifier of the target network element, and the CPU usage of the target network element are information in a target network element dimension. In this way, statistical collection is performed on the information in the target network element dimension, so that the first network element or an NWDAF network element can analyze the information in the target network element dimension, helping the first network element perform policy adjustment in the network element dimension, to prevent the network signaling storm.

In a possible design, the first request further includes a first condition, and the first condition includes at least one of the following: a first parameter corresponds to a first value; the first value corresponding to the first parameter is greater than or equal to a first threshold; or the first value corresponding to the first parameter is less than or equal to the first threshold. Correspondingly, the sending the first response to the first network element includes: when the first condition is met, sending the first response to the first network element.

In a possible design, the first request further includes a first time window. The first time window is used to determine a second time period in which the target network element receives a message and/or the target network element sends a message, and the second time period is used to determine time for performing a statistical analysis on the message that is received by the target network element and/or the message that is sent by the target network element. In a possible case, for example, time for performing the statistical analysis on the message that is received by the target network element to obtain at least one piece of statistical information is the first time period. In this case, the second time period may include the first time period.

In a possible design, the method further includes: obtaining first information from a second network element, where the first information includes a type of the message that is received by the target network element and/or the total number of messages that are received by the target network element, and/or a type of the message that is sent by the target network element and/or the total number of messages that are sent by the target network element; and determining the first response based on the first information.

In a possible design, the method further includes: obtaining second information from a third network element, where the second information includes at least one of the instance identifier of the target network element, signaling statistical measurement, the CPU usage of the target network element and/or CPU usage of a fourth network element, or load of the target network element and/or the fourth network element. Correspondingly, the determining the first response based on the first information includes: determining the first response based on the first information and the second information. In this design, the first response corresponding to the first request may be determined with reference to the first information and the second information.

In a possible design, the first network element is any one of the following: a mobility management function AMF network element, an operations administration management OAM network element, a network repository function NRF network element, a policy control function PCF network element, or an application function AF network element. In this design, the first network element may have a plurality of implementations, so that the communication method provided in this embodiment of this application can be flexibly implemented.

According to a second aspect, an embodiment of this application provides a communication method. The method is applied to a first network element, and the method includes: sending a first request to a network data analytics function network element, where the first request includes a first identifier of a target network element; and receiving a first response from the network data analytics function network element, where the first response includes analytics information of a message that is received by the target network element and/or analytics information of a message that is sent by the target network element.

In this embodiment of this application, the analytics information of the message that is received by the target network element includes at least one piece of statistical information.

In a possible design, the at least one piece of statistical information includes a total number of messages that are received by the target network element and/or a total number of messages that are received by the target network element and that are corresponding to a first message type.

Optionally, the at least one piece of statistical information further includes at least one of the following: a total number of messages that are received by the target network element in a first time period, a total number of messages that are received by the target network element in the first time period and that are corresponding to the first message type, and a total number of devices that initiate, in the first time period, messages that are of the first message type and whose total number is greater than a first number.

In this embodiment of this application, the analytics information of the message that is sent by the target network element includes at least one piece of statistical information.

In a possible design, the at least one piece of statistical information includes a total number of messages that are sent by the target network element and/or a total number of messages that are sent by the target network element and that are corresponding to the first message type.

Optionally, the at least one piece of statistical information further includes at least one of the following: a total number of response messages that are sent by the target network element, a total number of response messages that are sent by the target network element and that are corresponding to the first message type, a reason corresponding to the response message that is sent by the target network element, or a total number of response messages that are sent by the target network element and that are corresponding to a first reason.

In a possible design, the first response further includes at least one of the following: a type of the target network element, an instance identifier of the target network element, or CPU usage of the target network element.

In a possible design, the first request further includes a first time window. The first time window is used to determine a second time period in which the target network element receives a message and/or the target network element sends a message, and the second time period is used to determine a time period corresponding to the at least one piece of statistical information. In a possible case, the at least one piece of statistical information further includes at least one of the following: a total number of messages that are received by the target network element in a first time period, a total number of messages that are received by the target network element in the first time period and that are corresponding to the first message type, and a total number of devices that initiate, in the first time period, messages that are of the first message type and whose total number is greater than a first number. In this case, the second time period may include the first time period.

In a possible design, when the first network element is an access and mobility management function AMF network element, the method further includes: adjusting a flow control policy of the AMF network element based on the first response. The flow control policy includes one or more of the following: adjusting a number of AMFs that perform signaling exchange with a radio access device NG-RAN in an AMF pool, adjusting a proportion of rejection messages that are returned by the AMF network element, adjusting a value of a backoff timer carried in the rejection message that is returned by the AMF network element, or adjusting a number of messages that are sent by each NG-RAN to the AMF network element. In this design, after receiving the analytics information, the AMF network element adjusts the flow control policy of the AMF network element based on the analytics information. This can effectively prevent a network signaling storm, so as to effectively improve reliability of the communication network.

In a possible design, when the first network element is an operations administration management OAM network element, the method further includes: adjusting a network configuration based on the first response. The adjusting the network configuration includes at least one or more of the following: adjusting a flow control threshold configured for each network element in a wireless communication network, adjusting a number of AMFs in the AMF pool, adjusting a number of devices with a processing capability bottleneck in a network, or adjusting a routing policy. In this design, after receiving the analytics information, the OAM network element adjusts the network configuration based on the analytics information. This can effectively prevent the network signaling storm, so as to effectively improve the reliability of the communication network.

In a possible design, when the first network element is a network repository function NRF network element, the method further includes: adjusting a priority of the target network element based on the first response. The priority of the target network element is reference information used when the NRF network element selects the target network element. In this design, after receiving the analytics information, the NRF network element may adjust the priority of the target network element based on the analytics information, so that the NRF network element may select a target network element with reference to the priority, and a network element selected by the NRF network element does not cause network congestion. This can prevent the signaling storm caused by signaling congestion of the network element, so as to effectively improve the reliability of the communication network.

In a possible design, when the first network element is a policy control function PCF network element, the method further includes: adjusting a UE route selection policy URSP for data transfer or a future background data transfer policy based on the first response. In this design, after receiving the analytics information, the PCF network element may adjust, based on the analytics information, the UE route selection policy URSP for data transfer or the future background data transfer policy, so that the UE can avoid a network element where a signaling request is rejected, thereby effectively avoiding network congestion aggravation caused by UE data transfer and future background data transfer. This can prevent the network signaling storm, so as to effectively improve the reliability of the communication network.

In a possible design, when the first network element is an application function AF network element, the method further includes: adjusting, based on the first response, a policy of initiating a service request by the AF. The policy of the service request includes time and/or a frequency of initiating the service request by the AF. In this design, after receiving the analytics information, the AF network element may adjust, based on the analytics information, the policy of initiating the service request by the AF network element, for example, reduce duration and/or the frequency of initiating the service request by the AF. This can prevent network congestion aggravation caused by the request of the AF, and prevent generation or diffusion of the network signaling storm, so as to effectively improve the network reliability.

According to a third aspect, an embodiment of this application further provides a communication apparatus. The communication apparatus includes a module or a unit configured to implement the method according to the first aspect and any one of the possible designs of the first aspect.

According to a fourth aspect, an embodiment of this application further provides a communication apparatus. The communication apparatus includes a module or a unit configured to implement the method according to the second aspect and any one of the possible designs of the second aspect.

According to a fifth aspect, an embodiment of this application further provides a communication apparatus. The communication apparatus includes: a processor and a communication interface. The communication interface is configured to receive a signal from an apparatus other than the communication apparatus and transmit the signal to the processor, or send a signal from the processor to an apparatus other than the communication apparatus, and the processor executes code instructions by using a logic circuit to implement the method according to the first aspect and any one of the possible designs of the first aspect, or to implement the method according to the second aspect and any one of the possible designs of the second aspect. Optionally, the communication apparatus may further include a memory. The memory is coupled to the processor, and the memory stores program instructions and data that are necessary for the apparatus.

According to a sixth aspect, an embodiment of this application further provides a communication system. The communication system includes the communication apparatus in the third aspect and the communication apparatus in the fourth aspect.

According to a seventh aspect, an embodiment of this application provides a chip system, which includes a processor. The processor is coupled to a memory. The memory is configured to store a program or instructions. When the program or the instructions are executed by the processor, the chip system is enabled to implement the method according to the foregoing first aspect or any one of the possible designs of the foregoing first aspect, or to implement the method according to the foregoing second aspect or any one of the possible designs of the foregoing second aspect.

Optionally, the chip system further includes an interface circuit, and the interface circuit is configured to exchange code instructions with the processor.

Optionally, the chip system may include one or more processors, and the processor may be implemented by using hardware or by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, the memory in the chip system may also be one or more memories. The memory may be integrated with the processor, or may be disposed separately from the processor. This is not limited in this application. For example, the memory may be a non-transitory processor, for example, a read-only memory (read-only memory, ROM). The memory and the processor may be integrated on a same chip, or may be separately disposed on different chips. A type of the memory and a manner of disposing the memory and the processor are not specifically limited in this application.

According to an eighth aspect, an embodiment of this application provides a computer-readable storage medium, which stores a computer program or instructions. When the computer program or the instructions are executed, a computer is enabled to perform the method according to the foregoing first aspect or any one of the possible designs of the foregoing first aspect, or to perform the method according to the foregoing second aspect or any one of the possible designs of the foregoing second aspect.

According to a ninth aspect, an embodiment of this application provides a computer program product. When a computer reads and executes the computer program product, the computer is enabled to perform the method according to the foregoing first aspect or any one of the possible designs of the foregoing first aspect, or to perform the method according to the foregoing second aspect or any one of the possible designs of the foregoing second aspect.

According to a tenth aspect, an embodiment of this application provides a communication system. The communication system includes the communication apparatus in the foregoing third aspect or the communication apparatus in the foregoing fourth aspect.

For details about beneficial effects of the second aspect to the tenth aspect, refer to technical effects that can be achieved by corresponding designs in the first aspect. Details are not described herein again.

### BRIEF DESCRIPTION OF DRAWINGS

FIG. 1A shows a schematic flowchart 1 of occurrence of a network signaling storm;
FIG. 1B shows a schematic flowchart 2 of occurrence of a network signaling storm;
FIG. 2A shows an example of a diagram of an architecture of a possible communication system to which an embodiment of this application is applicable;
FIG. 2B shows an example of a diagram of an architecture of another possible communication system to which an embodiment of this application is applicable;
FIG. 2C shows an example of a diagram of an architecture of another possible communication system to which an embodiment of this application is applicable;
FIG. 3 shows an example of a schematic flowchart of a communication method according to an embodiment of this application;
FIG. 4 shows an example of a diagram of a structure of a communication apparatus according to an embodiment of this application;
FIG. 5 shows an example of a diagram of a structure of another communication apparatus according to an embodiment of this application; and
FIG. 6 shows an example of a diagram of a structure of still another communication apparatus according to an embodiment of this application.

### DESCRIPTION OF EMBODIMENTS

To make objectives, technical solution, and advantages of embodiments of this application clearer, the following further describes embodiments of this application in detail with reference to the accompanying drawings.

The following describes some terms in embodiments of this application, to help a person skilled in the art have a better understanding.

In embodiments of this application, the term "network element" may be replaced with "entity", "device", or the like. For example, the "AMF network element" may also be written as an "AMF entity" or an "AMF device", and the "SMF network element" may also be written as an "SMF entity" or an "SMF device". For ease of description, an "XXX network element" is uniformly abbreviated as an "XXX" in the following. For example, the "AUSF network element" may also be abbreviated as an "AUSF", and the "SMF network element" may also be abbreviated as an "SMF".

It should be understood that each network element shown in the terms in embodiments of this application may be a physical concept. For example, a network element may be a single device physically, or at least two network elements may be integrated into a same physical device. Alternatively, the network element shown in this specification may be a logical concept, for example, a software module or a network function corresponding to a service provided by each network element. The network function may be understood as a virtualization function in virtualization implementation, or may be understood as a network function providing a service in a service-based architecture.

In embodiments of this application, unless otherwise specified, a number of nouns represents "a singular noun or a plural noun", that is, "one or more". "At least one" means one or more, and "a plurality of" means two or more. "And/or" describes an association relationship between associated objects and represents that three relationships may exist. For example, A and/or B may represent the following three cases: Only A exists, both A and B exist, and only B exists, where A and B may be singular or plural. The character "/" generally represents an "or" relationship between the associated objects. For example, A/B represents A or B. "At least one of the following items (pieces)" or a similar expression thereof refers to any combination of these items, including any combination of singular items (pieces) or plural items (pieces). For example, at least one of a, b, or c represents a, b, c, a and b, a and c, b and c, or a, b, and c, where a, b, and c may be singular or plural.

In addition, unless otherwise stated, ordinal numbers such as "first" and "second" in embodiments of this application are for distinguishing between a plurality of objects, but are not intended to limit an order, a time sequence, priorities, or importance of the plurality of objects. In addition, the terms "include/comprise" and "have" in embodiments of this application, the claims, and the accompanying drawings are not exclusive. For example, a process, a method, a system, a product, or a device that includes a series of steps or modules is not limited to the listed steps or modules, and may further include steps or modules that are not listed.

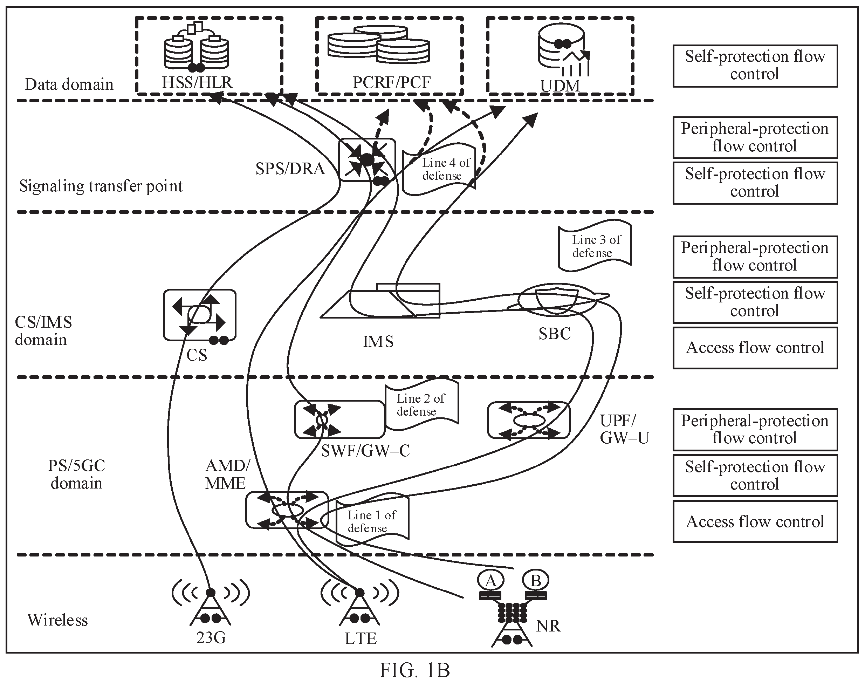

As shown in FIG. 1B, to prevent a signaling storm in a network, in a technical solution, hierarchical flow control of network elements is constructed, and flow control is set in advance on each node in the network. Current network flow control is divided into four lines of defense, each of the lines of defense is configured with self-protection flow control. In addition, the first three lines of defense are also configured with peripheral-protection flow control, mainly to avoid a larger-scale signaling storm caused by device breakdown on a back-end network element due to signaling impact. Access flow control is also configured for an AMF and an SMF, to control a number of messages from a message source. In this solution, self-adjustment of the network can be implemented based on a preconfigured mechanism only when the signaling storm occurs, but a signaling storm about to occur on the network cannot be predicted based on a signaling feature received by the network.

In another technical solution, for an analysis of a group of UEs in a target area, whether an anomaly occurs on a UE is mainly determined by analyzing behavior of the UE, but a reason of the anomaly cannot be distinguished. Therefore, whether the anomaly of the UE is caused by an attack on the UE or network congestion cannot be determined, and a signaling storm about to occur on the network cannot be directly determined based on the anomaly.

In another technical solution, an anomaly of a UE that does not conform to expected behavior of the UE is analyzed. The expected behavior of the UE mainly refers to a movement feature of the UE or a communication feature of the UE. The analysis is performed mainly for the UE instead of overall UE behavior features of a network. Therefore, it is impossible to determine, based on a single UE or a group of UEs, whether a signaling storm occurs on the network.

In conclusion, how to prevent a network signaling storm to improve reliability of a communication network is an issue that urgently needs to be resolved in this field.

In view of this, this application provides a communication method, apparatus, and system, to improve reliability of a communication network. In the method, a first request received by a network data analytics function network element from a first network element includes a first identifier of a target network element, so that the network data analytics function network element may feed back, to the first network element, analytics information of a message that is received by the target network element and/or analytics information of a message that is sent by the target network element. In this way, the first network element may preliminarily determine, based on the analytics information of the message that is received by the target network element and/or the analytics information of the message that is sent by the target network element, a message sending behavior feature of a user equipment and/or a network status (for example, whether signaling congestion occurs, and then determine a probability of a signaling storm occurring on the network), and then the first network element may take a corresponding measure to prevent a network signaling storm, so as to effectively improve the reliability of the communication network.

The technical solutions in embodiments of this application may be applied to communication systems of various standards, for example, a long term evolution (long term evolution, LTE) communication system, a universal mobile telecommunications system (universal mobile telecommunications system, UMTS), a code division multiple access (code division multiple access, CDMA) system, a wireless local area network (wireless local area network, WLAN), a next generation radio access network (next generation radio access network, NG-RAN) system, a new radio (new radio, NR) communication technology, a 5^{th} generation (5^{th} generation, 5G) communication system, a 6^{th} generation (6^{th} generation, 6G) communication system or another future evolved system (for example, a 7G communication system), vehicle to everything (vehicle to everything, V2X), long term evolution-vehicle (LTE-vehicle, LTE V), vehicle to vehicle (vehicle to vehicle, V2V), internet of vehicles, machine type communication (machine type communication, MTC), internet of things (internet of things, IoT), long term evolution-machine to machine (LTE-machine to machine, LTE-M), machine to machine (machine to machine, M2M), internet of things, or other various wireless communication systems using a wireless access technology.

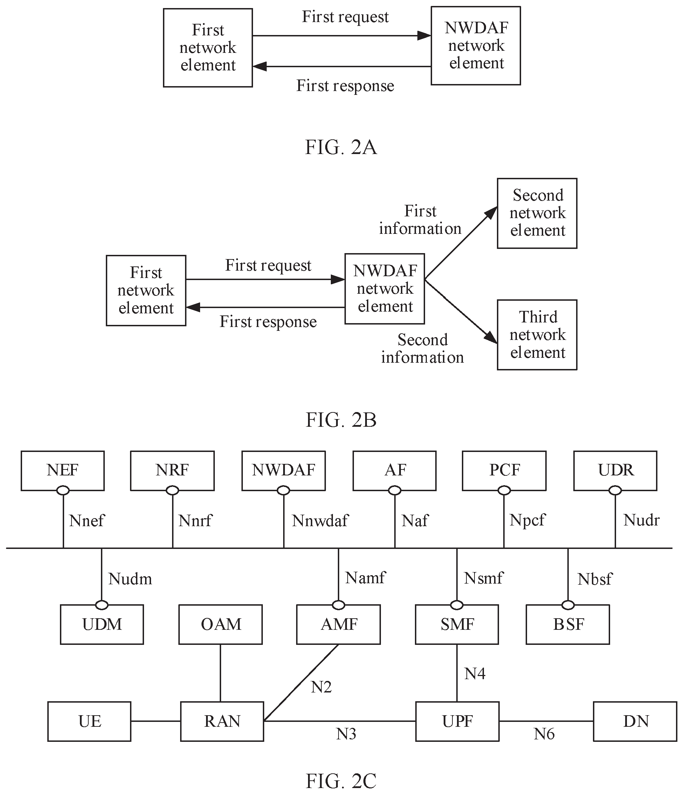

FIG. 2A is a diagram of an architecture of a possible communication system to which an embodiment of this application is applicable. In another possible scenario, the architecture of the communication system may also include another device. In FIG. 2A, the communication system includes a first network element and a network data analytics function (network data analytics function, NWDAF) network element. The first network element may be understood as a network function service consumer (network function service consumer, NFC) entity, which is referred to as an "NFC entity" or an "NFC" for short. Specifically, the first network element may be an NF that can invoke a function service in a service-based architecture. For example, the first network element may be any one of the following: an operations administration management (operations administration management, OAM) network element, an access and mobility management function (access and mobility management function, AMF), a policy control function (policy control function, PCF) network element, a session management function (session management function, SMF) network element, a network repository function (network repository function, NRF) network element, or an application function (application function, AF) network element. The NWDAF network element has a data analytics function, so that the first network element may send an analytics request to the NWDAF network element, to obtain a corresponding data analytics service.

In a possible implementation, the first network element may send a first request to the NWDAF network element, where the first request includes a first identifier of a target network element. Correspondingly, after receiving the first request, the NWDAF network element may correspondingly analyze a message that is received by the target network element and/or a message that is sent by the target network element, and send a first response to the first network element, where the first response includes analytics information of the message that is received by the target network element and/or analytics information of the message that is sent by the target network element.

FIG. 2B is a diagram of an architecture of another possible communication system to which an embodiment of this application is applicable. In FIG. 2A, the communication system may further include a second network element and a third network element. The second network element may be a target network element, or may be another network element that manages a message that is received and/or sent by the target network element. The third network element may be a network element that manages operations and maintenance information of a network element in a network, and the target network element is also in the network. For example, the second network element may be an AMF network element, and the AMF network element manages a message that is received by the target network element and/or a message that is sent by the target network element. The third network element may be, for example, an OAM network element, and the OAM network element manages information such as signaling statistical measurement, and CPU usage and/or load of the target network element and a fourth network element (that is, a network element that exchanges information with the target network element).

Correspondingly, in a possible implementation, after an NWDAF network element receives a first request from a first network element, as the first request includes a first identifier of the target network element, the NWDAF network element may obtain first information from the second network element, where the first information includes a type of a message that is received by the target network element and/or a total number of messages that are received by the target network element, and/or a type of a message that is sent by the target network element and/or a total number of messages that are sent by the target network element; and the NWDAF network element may obtain second information from the third network element, where the second information includes at least one of an instance identifier of the target network element, the signaling statistical measurement, the CPU usage of the target network element and/or the fourth network element, or the load of the target network element and/or the fourth network element. Then, the NWDAF network element may determine a first response based on the first information and the second information, and send the first response to the first network element. The first response includes analytics information of the message that is received by the target network element and/or analytics information of the message that is sent by the target network element.

The target network element may be, for example, at least one of an AMF network element, a PCF network element, a unified data management (unified data management, UDM) network element, a user plane function (user plane function, UPF), or a session management function (session management function, SMF) network element.

For example, FIG. 2C is a specific communication system to which an embodiment of this application is applicable. The communication system includes a terminal device, a radio access network (radio access network, RAN), and a core network (core network, CN).

The terminal device may include, for example, a handheld device having a wireless connection function or a processing device connected to a wireless modem. The terminal device may include a user equipment (user equipment, UE), a wireless terminal device, a mobile terminal device, a device-to-device (device-to-device, D2D) communication terminal device, a V2X terminal device, a machine-to-machine/machine-type communication (machine-to-machine/machine-type communication, M2M/MTC) terminal device, an internet of things (internet of things, IoT) terminal device, a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), a user device (user device), or the like. For example, the terminal device may include a mobile phone (or referred to as a "cellular" phone), a computer having a mobile terminal device, or a portable, pocket-sized, handheld, or a computer-embedded mobile apparatus. For example, the terminal device may be a device such as a personal communication service (personal communication service, PCS) phone, a cordless telephone set, a session initiation protocol (session initiation protocol, SIP) phone, a wireless local loop (wireless local loop, WLL) station, or a personal digital assistant (personal digital assistant, PDA). The terminal device may further include a limited device, for example, a device with low power consumption, a device with a limited storage capability, or a device with a limited computing capability. For example, the terminal device includes an information sensing device such as a barcode, radio frequency identification (radio frequency identification, RFID), a sensor, a global positioning system (global positioning system, GPS), or a laser scanner. In FIG. 2C, for example, the terminal device is a UE. The UE may communicate with the CN via the RAN, and exchange voice and/or data with the RAN.

By way of example, and not limitation, in embodiments of this application, the terminal device may alternatively be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or a part of functions without depending on smartphones, for example, a smart watch or smart glasses, and include devices that are dedicated to only one type of application function and that need to collaboratively work with other devices such as smartphones, for example, various smart bands, smart helmets, or smart jewelry for monitoring physical signs. If the various terminal devices described above are located in a vehicle (for example, placed in the vehicle or installed in the vehicle), the terminal devices may be all considered as vehicle-mounted terminal devices. For example, the vehicle-mounted terminal devices are also referred to as on-board units (on-board unit, OBU).

The foregoing RAN is mainly responsible for access of a UE. A RAN device is a device that is positioned on a network side of the foregoing communication system and that has a wireless transceiver function or a chip that can be disposed in the device. The access network device includes but is not limited to: an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (base band unit, BBU), an access point (access point, AP) in a wireless fidelity (wireless fidelity, Wi-Fi) system, a wireless relay node, a wireless backhaul node, a transmission point (transmission and reception point, TRP, or Transmission Point, TP), or the like. Alternatively, the access network device may be 5G, for example, a gNB in a new radio (new radio, NR) system, or a transmission point (TRP or TP), or one antenna panel or a group of antenna panels (including a plurality of antenna panels) of a base station in a 5G system, or may be a network node, such as a baseband unit (BBU) or a distributed unit (distributed unit, DU), that constitutes a gNB or a transmission point.

As a bearer network, the CN provides an interface to a data network (data network, DN), and provides the terminal device with communication connection, authentication, management, policy control, data service bearer, and the like. The foregoing CN may include one or more CN devices. The CN device may be a network element configured to perform the foregoing single network function, or may be a network element configured to perform the foregoing plurality of network functions. When one CN device is configured to perform the foregoing plurality of network functions, the CN device may include one or more functional modules configured to perform the foregoing plurality of network functions. The functional module may be a software module, or may be a software and hardware module. This is not limited in embodiments of this application. Using the 5G system as an example, the CN may include the following network elements: a network exposure function (network exposure function, NEF) network element, an NRF network element, an NWDAF network element, an AF network element, a PCF network element, a unified data repository (unified data repository, UDR) network element, a UDM network element, an OAM network element, an AMF network element, an SMF network element, a binding support function (binding support function, BSF) network element, a UPF network element, and the like.

The following describes related core network elements in embodiments of this application.

The NWDAF network element is configured to analyze data provided by a 5G core network function (5GC NF) and the OAM network element. The 5GC NF or the OAM network element may send an analytics request to the NWDAF network element. After receiving the analytics request, the NWDAF network element may collect data from a related network element, train an artificial intelligence (artificial intelligence, AI) model, and finally perform data inference by using the AI model, and feed back an inference result to the corresponding 5GC NF or the OAM network element. Based on different functions, NWDAFs can be classified into an NWDAF that supports training (that is, NWDAF (MTLF)) and an NWDAF that supports inference (that is, NWDAF (AnLF)). The NWDAF (AnLF) may request AI model information from the NWDAF (MTLF) for data inference.

The OAM network element is configured to be responsible for operations, management, and maintenance of a network element in a 5GC, and may collect measurement data of the network element in the 5GC. The measurement data includes signaling measurement, data measurement, common network element measurement, and the like.

The AMF network element is configured to manage and control access, mobility, a session, policy control, and the like of a user equipment.

The SMF network element is configured to manage and control a session, policy control, user plane routing, data transfer control, and the like of the user equipment.

The PCF network element is configured to formulate and execute a network policy, to control access, quality of service, resource allocation, and the like of the user equipment, so as to ensure effective utilization of a network resource and efficient communication of the user equipment.

The NRF network element is configured to be responsible for NF automatic management, selection, and extension, specifically including NF service registration, discovery, status monitoring, service authorization, and the like, to implement on-demand configuration of a network function and a service, and interconnection between NFs. For example, the NRF has functions such as token generation and token verification.

The AF network element is configured to be responsible for functions such as policy control, QoS guarantee, and application classification of a specific application, so as to ensure that the user equipment can obtain a high-quality communication service based on an application requirement.

The UPF network element is configured to process actual data transfer between the user equipment and the service, and also undertake functions such as data policy processing, QoS control, and data path management, so as to ensure that the user equipment obtains an efficient and stable communication service in a 5G network.

It should be noted that the NWDAF, the AMF, the SMF, the AUSF, the UDM, the NEF, the PCF, the AF, the NSSF, and the like described above may interact with each other via a service-oriented interface. For example, as shown in FIG. 2C, Namf, Nsmf, Nausf, Nudm, Nnef, Npcf, Naf, Nnssf, and Nnrf are respectively service-oriented interfaces presented by the AMF, the SMF, the AUSF, the UDM, the NEF, the PCF, the AF, the NSSF, and the NRF; N2 is a service-oriented interface between the RAN and the AMF; and N3, N4, and N6 are respectively service-oriented interfaces between the RAN, the SMF, the DN, and the UPF.

The first network element in FIG. 2A may be specifically any one of the AMF, the SMF, the NRF, the PCF, the AF, and the like in FIG. 2C. The NWDAF network element in FIG. 2A may be specifically the NWDAF in FIG. 2C.

The following describes the communication method provided in embodiments of this application with reference to the accompanying drawings.

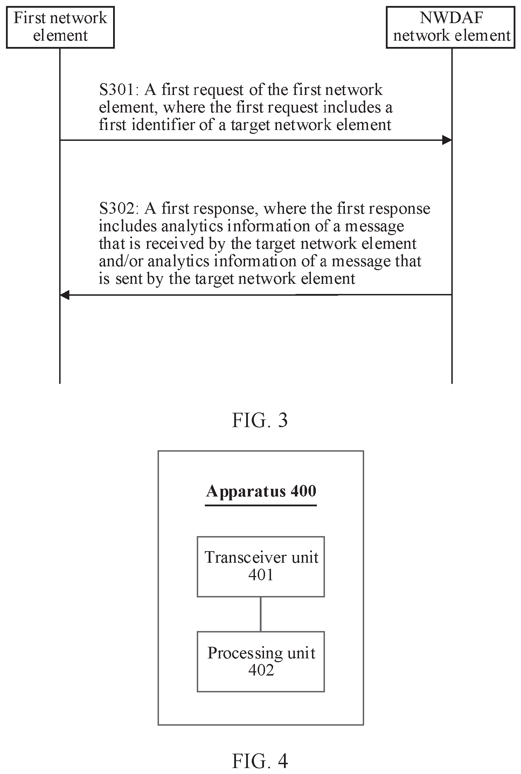

FIG. 3 is a diagram of a communication method according to an embodiment of this application. The method may be applied to the communication system shown in FIG. 2A to FIG. 2C. The communication method includes the following procedure.

S301: A first network element sends a first request to an NWDAF network element, where the first request includes a first identifier of a target network element. Correspondingly, the NWDAF network element receives the first request.

S302: The NWDAF network element sends a first response to the first network element, where the first response includes analytics information of a message that is received by the target network element and/or analytics information of a message that is sent by the target network element. Correspondingly, the first network element receives the first response.

In this embodiment of this application, the first request may also be referred to as any one of an analytics subscription request, a subscription request, or an analytics request, and the first response is a response message corresponding to the first request. The following describes in detail information carried in the first request and the first response.

In this embodiment of this application, the first request may include but is not limited to at least one piece of the following information.

### 1. First identifier of the target network element

In this embodiment of this application, the first identifier of the target network element may include one or more of a network function instance identifier (network function instance identifier, NF instance ID) corresponding to the target network element, a network function instance identifier list (network function instance identifier list, NF instance ID list) corresponding to the target network element, a target area corresponding to the target network element, or a network element type corresponding to the target network element. The target network element is one or more to-be-analyzed network elements. Correspondingly, the first identifier of the target network element may be an instance identifier of one to-be-analyzed network element, or the first identifier of the target network element may be an instance identifier list corresponding to a plurality of to-be-analyzed network elements, or the first identifier of the target network element may be a target area in which one or more to-be-analyzed network elements are located, or the first identifier of the target network element may be a network element type corresponding to one or more to-be-analyzed network elements.

For example, when the target network element is one AMF network element, the first identifier of the target network element may include at least one of the following: a network function instance identifier of the AMF network element, a target area in which the AMF network element is located, or a network element type of the target network element is set to AMF.

For another example, when the target network element is a plurality of AMF network elements, the first identifier of the target network element may include at least one of the following: a network function instance identifier list of the plurality of AMF network elements, a target area in which the plurality of AMF network elements are located, or a network element type of the target network element is set to AMF.

For another example, when the target network element is an AMF network element and an SMF network element, the first identifier of the target network element may include at least one of the following: a network function instance identifier list of the AMF network element and the SMF network element, a target area in which the AMF network element and the SMF network element are located, or a network element type of the target network element is set to AMF and SMF.

### 2. First condition

In this embodiment of this application, the first condition may be understood as a condition for the NWDAF network element to feed back the first response to the first network element, and the first condition may be included in analytics report filter (analytics report filter) information.

In this embodiment of this application, the first condition may include but is not limited to one or more of the following cases.

Case 1: The first condition is that a first parameter is corresponding to a first value.

In Case 1, the first parameter may include, for example, a reason why the target network element sends a rejection message and/or a message type corresponding to the rejection message that is sent by the target network element.

For example, if the first parameter is the reason why the target network element sends the rejection message, and the first value is a network fault, the first condition may include: the reason why the target network element sends the rejection message is the network fault.

For another example, if the first parameter is the message type corresponding to the rejection message that is sent by the target network element, and the first value is a session request message, the first condition may include: the type of the rejection message that is sent by the target network element is the session request message.

For another example, the first parameter includes the reason why the target network element sends the rejection message and the message type corresponding to the rejection message that is sent by the target network element, and the first value is a network fault and a session request message, the first condition may include: the reason why the target network element sends the rejection message is the network fault, and the type of the rejection message that is sent by the target network element is the session request message.

Case 2: The first condition is that the first value corresponding to the first parameter is greater than or equal to a first threshold.

In Case 2, the first parameter may include, for example, one or more of the following: a total number of messages that are received by the target network element, a total number of messages that are rejected by the target network element, a total number of messages that are sent by the target network element, a total number of rejection messages that are sent by the target network element, a failure rate of a request message, a total number of rejection messages that are sent by the target network element and that are corresponding to a first reason, a total number of rejection messages that are sent by the target network element and that are corresponding to a first message type, or a total number of rejection messages that are sent by the target network element and that are corresponding to the first message type. The first threshold may include one or more thresholds, and values of the one or more thresholds may be the same or different. The message that is rejected by the target network element is a message for which requesting fails.

For example, the first parameter is the total number of messages that are received by the target network element, the first value corresponding to the first parameter is a specific numeric value corresponding to the total number of messages that are received by the target network element, and the first threshold is 10,000. In this case, the first condition may include: a specific numeric value corresponding to a total number of messages that are received by the target network element in unit time or in a first time period is greater than or equal to 10,000.

For another example, the first parameter is the total number of messages that are rejected by the target network element, the first value corresponding to the first parameter is a specific numeric value corresponding to the total number of messages that are rejected by the target network element, and the first threshold is 1,000. In this case, the first condition may include: a specific numeric value corresponding to a total number of messages that are rejected by the target network element in unit time or in a first time period is greater than or equal to 1,000.

For another example, the first parameter is the total number of messages that are sent by the target network element, the first value corresponding to the first parameter is a specific numeric value corresponding to the total number of messages that are sent by the target network element, and the first threshold is 10,000. In this case, the first condition may include: a total number of messages that are sent by the target network element in unit time or in a first time period is greater than or equal to 10,000.

For another example, the first parameter is the total number of rejection messages that are sent by the target network element and the failure rate of the request message, the first value corresponding to the first parameter is a specific numeric value corresponding to the total number of rejection messages that are sent by the target network element and a specific numeric value corresponding to the failure rate of the request message, and the first threshold is 100 and 30%. In this case, the first condition may include: a specific numeric value corresponding to a total number of rejection messages that are sent by the target network element in unit time or in a first time period is greater than or equal to 100, and a specific numeric value corresponding to the failure rate of the request message is greater than, or greater than or equal to 30%.

For another example, the first parameter is the total number of rejection messages that are sent by the target network element and that are corresponding to the first reason, the first value corresponding to the first parameter is a specific numeric value corresponding to the total number of rejection messages that are sent by the target network element and that are corresponding to the first reason, the first threshold is 1,000, and the first reason is a network fault. In this case, the first condition may include: a total number of rejection messages that are sent by the target network element in unit time or in a first time period and for which a reason is the network fault is greater than or equal to 1,000.

For another example, the first parameter is the total number of rejection messages that are sent by the target network element and that are corresponding to the first message type, the first value corresponding to the first parameter is a specific numeric value corresponding to the total number of rejection messages that are sent by the target network element and that are corresponding to the first message type, the first threshold is 1,000, and the first message type is a registration request message. In this case, the first condition may include: a total number of rejection messages that are sent by the target network element in unit time or in a first time period and whose message types are the registration request message is greater than or equal to 1,000.

Case 3: The first value corresponding to the first parameter is less than or equal to the first threshold.

In Case 3, the first parameter may include, for example, one or more of the following: time taken by the target network element to receive a fixed number of messages, a total number of messages that are accepted by the target network element, a total number of consent messages that are sent by the target network element, or a success rate of a request message. The first threshold may include one or more thresholds, and values of the one or more thresholds may be the same or different. The message that is accepted by the target network element is a message for which requesting succeeds.

For example, the first parameter is the time taken by the target network element to receive the fixed number of messages, the first value corresponding to the first parameter is a specific numeric value corresponding to the time taken by the target network element to receive the fixed number of messages, the fixed number is 10,000, and the first threshold includes a time threshold of 30s corresponding to time taken by the target network element to receive 10,000 messages. In this case, the first condition may be: a specific numeric value corresponding to the time taken by the target network element to receive 10,000 messages is less than or equal to 30.

For another example, the first parameter is the total number of messages that are accepted by the target network element, the first value corresponding to the first parameter is a specific numeric value corresponding to the total number of messages that are accepted by the target network element, and the first threshold is 500. In this case, the first condition may be: a specific numeric value corresponding to a total number of messages that are accepted by the target network element in unit time or in a first time period is less than or equal to 500.

For another example, the first parameter is the total number of consent messages that are sent by the target network element and the success rate of the request message, the first value corresponding to the first parameter is a specific numeric value corresponding to the total number of consent messages that are sent by the target network element and a specific numeric value corresponding to the success rate of the request message, and the first threshold is 100 and 10%. In this case, the first condition may include: a specific numeric value corresponding to a total number of consent messages that are sent by the target network element in unit time or in a first time period is less than or equal to 100, and a specific numeric value corresponding to the success rate of the request message is less than or equal to 10%.

It should be understood that the message that is accepted by the target network element is a message for which requesting succeeds, and the message that is rejected by the target network element is a message for which requesting fails. The foregoing first time period may include one or more time periods, and duration corresponding to each time period may be, for example, 5 minutes, 10 minutes, or 30 minutes. This is not specifically limited in this embodiment of this application.

### 3. First time window

In this embodiment of this application, the first time window may be understood as one or more time periods. The one or more time periods are used to determine a second time period in which the target network element receives a message and/or the target network element sends a message. The foregoing second time period may include one or more time periods, and duration corresponding to the second time period may be, for example, 10 minutes or 30 minutes. This is not specifically limited in this embodiment of this application. For example, when the duration corresponding to the second time period is 30 minutes, the NWDAF network element may collect statistics, every 30 minutes, on messages that are received by the target network element and/or messages that are sent by the target network element.

Further, the second time period may be used to determine time taken for performing a statistical analysis on the message that is received by the target network element and/or the message that is sent by the target network element. In a possible case, the second time period may include the foregoing first time period.

For example, the duration corresponding to the second time period is 30 minutes, and the second time period is 11:00 to 11:30; and duration corresponding to the first time period is 10 minutes, and the first time period is 11:00 to 11:10. The NWDAF network element may collect statistics on a total number of messages that are received by the target network element and/or a total number of messages that are sent by the target network element from 11:00 to 11:30, but the NWDAF network element analyzes only messages that are received by the target network element and/or messages that are sent by the target network element from 11:00 to 11:10.

For another example, the duration corresponding to the second time period is 30 minutes, and the second time period is 11:00 to 11:30; and duration corresponding to the first time period is 30 minutes, and the first time period is 11:00 to 11:10. The NWDAF network element may collect statistics on a total number of messages that are received by the target network element and/or a total number of messages that are sent by the target network element from 11:00 to 11:30, and analyze the total number of messages that are received by the target network element and/or the total number of messages that are sent by the target network element from 11:00 to 11:30.

In this embodiment of this application, the first response may include but is not limited to at least one piece of the following information.

### 1. Analytics information of the message that is received by the target network element

In this embodiment of this application, the analytics information of the message that is received by the target network element includes statistical information 1. The statistical information 1 may include, for example, at least one of the following: a specific numeric value corresponding to a parameter, a specific numeric value corresponding to a parameter is within a first numeric value interval, a specific numeric value corresponding to a parameter is greater than or equal to a first numeric value, or a specific numeric value corresponding to a parameter is less than or equal to the first numeric value.

In a possible implementation, the statistical information 1 may include but is not limited to one or more pieces of information indicated by the following A1 to A5.

### A1: Total number of messages that are received by the target network element

For example, the target network element is an AMF. The statistical information 1 may include a total number of messages that are received by the AMF. For another example, the target network element is an AMF and an SMF. The statistical information 1 may include a total number of messages that are received by the AMF and the SMF, a total number of messages that are received by the AMF, and a total number of messages that are received by the SMF.

In this way, statistical collection is performed on the total number of messages that are received by the target network element, so that the NWDAF network element or the first network element can determine, based on the total number of messages that are received by the target network element, whether a network signaling storm risk exists in a communication network.

Optionally, the statistical information 1 may further include a total number of messages that are accepted by the target network element, a number interval to which the total number of messages that are accepted by the target network element belongs, a message type corresponding to the message that is accepted by the target network element, and a proportion of the messages that are accepted by the target network element to the messages that are received by the target network element. In addition, the statistical information 1 may further include a total number of messages that are rejected by the target network element, a number interval to which the total number of messages that are rejected by the target network element belongs, a message type corresponding to the message that is rejected by the target network element, and a proportion of the messages that are rejected by the target network element to the messages that are received by the target network element.

For example, using an AMF as an example, the statistical information 1 may include a total number of messages that are accepted by the AMF, a number interval to which the total number of messages that are accepted by the AMF belongs, a message type corresponding to the message that is accepted by the AMF, and a proportion of the messages that are accepted by the AMF to messages that are received by the AMF. In addition, the statistical information 1 may further include a total number of messages that are rejected by the AMF, a number interval to which the total number of messages that are rejected by the AMF belongs, a message type corresponding to the message that is rejected by the AMF, and a proportion of the messages that are rejected by the AMF to messages that are received by the AMF.

For another example, the target network element is an AMF and an SMF. The statistical information 1 may include a total number of messages that are accepted by the AMF, a number interval to which the total number of messages that are accepted by the AMF belongs, a message type corresponding to the message that is accepted by the AMF, and a proportion of the messages that are accepted by the AMF to messages that are received by the AMF, a total number of messages that are accepted by the SMF, a number interval to which the total number of messages that are accepted by the SMF belongs, a message type corresponding to the message that is accepted by the SMF, a proportion of the messages that are accepted by the SMF to messages that are received by the SMF, a total number of messages that are accepted by the AMF and SMF, a number interval to which the total number of messages that are accepted by the AMF and SMF belongs, a message type corresponding to the message that is accepted by the AMF and SMF, and a proportion of the messages that are accepted by the AMF and SMF to messages that are received by the AMF and SMF. In addition, the statistical information 1 may further include a total number of messages that are rejected by the AMF, a number interval to which the total number of messages that are rejected by the AMF belongs, a message type corresponding to the message that is rejected by the AMF, a proportion of the messages that are rejected by the AMF to the messages that are received by the AMF, a total number of messages that are rejected by the SMF, a number interval to which the total number of messages that are rejected by the SMF belongs, a message type corresponding to the message that is rejected by the SMF, and a proportion of the messages that are rejected by the SMF to the messages that are received by the SMF, a total number of messages that are rejected by the AMF and SMF, a number interval to which the total number of messages that are rejected by the AMF and SMF belongs, a message type corresponding to the message that is rejected by the AMF and SMF, and a proportion of the messages that are rejected by the AMF and SMF to the messages that are received by the AMF and SMF.

### A2: Total number of messages that are received by the target network element and that are corresponding to the first message type

The first message type may include at least one of a registration request message, a session request message, a service request message, or the like. The registration request message may be, for example, at least one of an initial registration request, a periodic registration request, an emergency registration request, a mobility registration update request, or the like. The session request message may be, for example, at least one of a protocol data unit (protocol data unit, PDU) session establishment request, a quality of service (quality of service, QoS) flow establishment request, a paging request, or the like. The service request message may be, for example, at least one of an identity authentication request, an access request, a resource request, or the like.

In this way, statistical collection is performed on the total number of messages that are received by the target network element and that are corresponding to the first message type, so that the NWDAF network element or the first network element can determine, in a first message type dimension and based on the total number of messages that are received by the target network element and that are corresponding to the first message type, whether a network signaling storm risk exists. For example, when the NWDAF network element feeds back, to the first network element, that a total number of registration request messages that are received by the target network element in an analysis time period is greater than 5,000, the first network element considers that the target network element has a network signaling storm risk.

Optionally, the statistical information 1 may further include a total number of messages that are accepted by the target network element and that are corresponding to the first message type, and a total number of messages that are rejected by the target network element and that are corresponding to the first message type.

### A3: Total number of messages that are received by the target network element in the first time period

In this way, statistical collection is performed on the total number of messages that are received by the target network element in the first time period, so that the NWDAF network element or the first network element can determine, based on the total number of messages that are received by the target network element in the first time period, whether a network signaling storm risk exists in the communication network in the first time period. The first time period may be, for example, 5 minutes or 10 minutes. This is not specifically limited in this embodiment of this application. The first time period may be the same as or different from the time periods included in the foregoing first time window.

Optionally, the statistical information 1 may include a total number of messages that are accepted by the target network element in the first time period and/or a total number of messages that are rejected by the target network element in the first time period.

### A4: Total number of messages that are received by the target network element in the first time period and that are corresponding to the first message type

In this way, statistical collection is performed on the total number of messages that are received by the target network element in the first time period and that are corresponding to the first message type, so that the NWDAF network element or the first network element can determine, in a first message type dimension and based on the total number of messages that are received by the target network element and that are corresponding to the first message type, whether a network signaling storm risk exists in the first time period.

### A5: Total number of devices that initiate, in the first time period, messages that are of the first message type and whose total number is greater than a first number

In this way, statistical collection is performed on the total number of devices that initiate, in the first time period, messages that are of the first message type and whose total number is greater than the first number, so that the first network element can analyze a device having abnormal behavior. The device herein may be a UE and/or a network element. This is not specifically limited in this embodiment of this application.

For example, if the first time period is one minute, and the first number is 50, information shown in B3 is a total number of UEs that send, within one minute, messages that are of the first message type and whose total number is greater than 50 to the target network element.

For another example, if the first time period is five minutes, and the first number is 50, information shown in B3 is a total number of network elements that send, within five minutes, messages that are of the first message type and whose total number is greater than 50 to the target network element.

For another example, if the first time period is 10 minutes, and the first number is 50, information shown in B3 is a total number of UEs and network elements that send, within 10 minutes, messages that are of the first message type and whose total number is greater than 50 to the target network element.

### 2. Analytics information of the message that is sent by the target network element

In this embodiment of this application, the analytics information of the message that is sent by the target network element includes statistical information 2. The statistical information 2 may include, for example, at least one of the following: a specific numeric value corresponding to a parameter, a specific numeric value corresponding to a parameter is within a first numeric value interval, a specific numeric value corresponding to a parameter is greater than or equal to a first numeric value, or a specific numeric value corresponding to a parameter is less than or equal to the first numeric value.

In a possible implementation, the statistical information 2 may include but is not limited to one or more pieces of information indicated by the following B1 to B6.

### B1: Total number of messages that are sent by the target network element

In this way, statistical collection is performed on the total number of messages that are sent by the target network element, so that the first network element or the NWDAF network element can determine, based on the total number of messages that are sent by the target network element, whether a network signaling storm risk exists in the communication network.

For example, when a total number of messages that are sent by the target network element to a fourth network element in unit time or the first time period is greater than 10,000, the first network element may consider, based on information fed back by the NWDAF network element, that the fourth network element has a risk of congestion or a network signaling storm, or the NWDAF network element considers that the fourth network element has a risk of congestion or a network signaling storm.

### B2: Total number of messages that are sent by the target network element and that are corresponding to the first message type

In this way, statistical collection is performed on the total number of messages that are sent by the target network element and that are corresponding to the first message type, so that the first network element or the NWDAF network element can determine, in a first message type dimension and based on the total number of messages that are sent by the target network element and that are corresponding to the first message type, whether a network signaling storm risk exists.

For example, when a total number of registration request messages that are sent by the target network element to a fourth network element in unit time or the first time period is greater than 5,000, the first network element may consider, based on information fed back by the NWDAF network element, that the target network element has a risk of congestion or a network signaling storm, or the NWDAF network element considers that the fourth network element has a risk of congestion or a network signaling storm.

### B3: Total number of response messages that are sent by the target network element

The response message that is sent by the target network element may be, for example, a response message of at least one of a registration request message, a session request message, or a service request message. The response message includes an accept response message and/or a rejection response message. The accept response indicates that a request message is accepted by the target network element, and the rejection response message indicates that a request message is rejected by the target network element.

Optionally, the statistical information 2 may further include at least one of the following: a total number of accept response messages that are sent by the target network element, a proportion of the accept response messages that are sent by the target network element to the response messages that are sent by the target network element, a total number of rejection response messages that are sent by the target network element, or a proportion of the rejection response messages that are sent by the target network element to the response messages that are sent by the target network element. In this way, the first network element can determine, based on information fed back by the NWDAF network element, or the NWDAF network element can determine, based on statistical information related to the accept response messages and/or the rejection response messages that are sent by the target network element, whether a signaling storm risk exists in the network.

### B4: Total number of response messages that are sent by the target network element and that are corresponding to the first message type

For the first message type, refer to the foregoing related descriptions. Details are not described herein again.

### B5: Reason corresponding to the response message that is sent by the target network element

The response message that is sent by the target network element includes a rejection message that is sent by the target network element. Correspondingly, the reason corresponding to the response message that is sent by the target network element may be understood as a reason for sending the rejection message by the target network element. The reason for sending the rejection message by the target network element may include but is not limited to at least one of the following: network congestion, subscription information of a UE expires, the UE is in arrears, the UE is restricted from accessing a specific area, and the like.

### B6: Total number of response messages that are sent by the target network element and that are corresponding to a first reason

The first reason may be one or more reasons. The first reason may include but is not limited to at least one of the following: network congestion, subscription information of a UE expires, the UE is in arrears, the UE is restricted from accessing a specific area, and the like.

For example, the first reason may be a network fault. For another example, the first reason may be a network fault and that the UE is invalid.

With reference to the information indicated by any one of B1 to B6, the first network element or the NWDAF network element can determine, based on the statistical information related to the response message that is sent by the target network element, whether a network signaling storm risk exists in the communication network.

Optionally, the statistical information 2 may further include at least one piece of the following information shown in C1 to C3. The information shown in C1 to C3 is information in a target network element dimension. In this way, statistical collection is performed on the information in the target network element dimension, so that the first network element or the NWDAF network element can analyze the information in the target network element dimension, helping the first network element perform policy adjustment in a network element dimension, to prevent a network signaling storm.

### C1: Type of the target network element

For example, the type of the target network element may include a type corresponding to the SMF and/or the AMF.

### C2: Instance identifier of the target network element

For example, the instance identifier of the target network element may include a network function instance identifier corresponding to the SMF and/or the AMF.

### C3: CPU usage of the target network element

For example, the CPU usage of the target network element may include CPU usage of the SMF and/or the AMF.

### 3. Valid time (valid time)

The valid time indicates a validity period of the first response, and the valid time may be, for example, 10 minutes, 30 minutes, or the like.

### 4. Probability of a network signaling storm (signal storm probability) occurring in the first time period

The probability of the network signaling storm occurring in the first time period represents a trend that the network signaling storm occurs in the first time period.

### 5. Confidence (confidence)

The confidence represents a trustworthiness degree of the probability of the signaling storm occurring in the first time period.

### 6. Difference between total numbers of messages that are received by the target network element in two consecutive periodicities.

A periodicity may be considered as a time period, and the difference between the total numbers of messages that are received by the target network element in two consecutive periodicities may be understood as a difference between a total number of messages that are received by the target network element in a current time period and a total number of messages that are received by the target network element in a previous time period.

It can be learned from the foregoing descriptions that the first network element may be understood as a network function service consumer entity, and the first network element may be any one of the following: an AMF network element, an OAM network element, an NRF network element, a PCF network element, or an AF network element.

In the foregoing S301, after receiving the first request, the NWDAF network element needs to obtain information related to the target network element, to determine the foregoing first response. The target network element may include the first network element, or the target network element may not include the first network element. For different cases, specific implementations in which the NWDAF network element obtains the information related to the target network element are different. The following provides descriptions based on cases.

Case 1: The target network element is the first network element.

For example, the first network element is an AMF network element, the target network element is the AMF network element, and the NWDAF network element may obtain first information from the AMF network element. The first information includes a type of a message that is received by the AMF and/or a total number of messages that are received by the AMF, and/or a type of a message that is sent by the AMF and/or a total number of messages that are sent by the AMF. In addition, the NWDAF network element may determine the foregoing first response based on the first information. Optionally, the first information may further include a UE identifier, a frequency of initiating a registration request by a UE, a frequency of initiating a service request by the UE, a frequency of initiating a PDU session request by the UE, a registration request result, and a corresponding reason value that are shown in Table 1.

**Table 1**

| | Parameter identifier in English | Parameter description |
|---|---|---|
| UE identifier | 5G-GUTI/SUCI/SUPI | GUTI: An identifier allocated by an AMF to a UE during previous access. When the UE performs access again, the UE may include the identifier. |
| | | If a message is directly rejected, a GUTI remains unchanged when the UE initiates a registration request again next time. In this case, a number of rejected messages of the UE with the same GUTI can be identified based on the identifier. |
| | | When the registration request of the UE is received by the AMF, the GUTI is also collected. After collecting the message, the AMF may allocate a new GUTI, and an SUPI of the UE is also collected. The two GUTIs are associated, and are also associated with the SUPI, indicating that the two messages belong to the same UE. The message is associated with the UE. |
| | | When the UE uses an SUCI to perform access, the SUCI and the GUTI in the message are collected to associate messages of the same UE. |
| Registration request frequency | Frequent Registration: | Times of initiating each of the foregoing registration requests by the UE in a time period. |
| Service request frequency | Frequent service request: | Times of initiating a service request by the UE in a time period. |
| Frequency of initiating a PDU session request | Frequent PDU session request | Times of initiating a PDU session establishment request by the UE in a time period, where times of PDU session initial establishments are collected. |
| Registration request result and corresponding reason value | accept/reject: error code | When a registration request is rejected by a network, the network may include a reason value. The reason value may be used to determine whether a UE registration failure is caused by the network or the UE (the UE is invalid and the UE is restricted from accessing the network in a registration area). |

Case 2: The target network element includes the first network element.

For example, the first network element is an AMF network element, the target network element is the AMF network element and an SMF network element. The NWDAF network element may obtain first information from the AMF network element. The first information includes a type of a message that is received by the AMF and/or a total number of messages that are received by the AMF, and/or a type of a message that is sent by the AMF and/or a total number of messages that are sent by the AMF, a type of a message that is received by the SMF and/or a total number of messages that are received by the SMF, and/or a type of a message that is sent by the SMF and/or a total number of messages that are sent by the SMF. In addition, the NWDAF network element may determine the foregoing first response based on the first information.

For another example, the first network element is an AMF network element, the target network element is the AMF network element and an SMF network element. The NWDAF network element may obtain first information from the AMF network element. The first information includes a type of a message that is received by the AMF and/or a total number of messages that are received by the AMF, and/or a type of a message that is sent by the AMF and/or a total number of messages that are sent by the AMF, a type of a message that is received by the SMF and/or a total number of messages that are received by the SMF, and/or a type of a message that is sent by the SMF and/or a total number of messages that are sent by the SMF. In addition, the NWDAF network element may obtain second information from a third network element. The second information includes at least one of an instance identifier of the AMF network element, signaling statistical measurement, CPU usage of the AMF network element and the SMF network element, or load of the AMF network element and the SMF network element. The third network element may be, for example, an OAM network element. Further, the NWDAF network element may determine the foregoing first response based on the first information and the second information.

The signaling statistical measurement refers to performance measurement of the OAM network element. For example, the second information obtained by the NWDAF network element from the OAM network element may be shown in Table 2 (signaling measurement of a RAN and signaling measurement of an AMF are used as an example, and performance measurement of another network element, such as an SMF/a UDM, may be further included, which is not listed one by one). RAN measurement data includes a number of attempted RRC connection establishments (attempted RRC connection establishments), a number of successful RRC connection establishments (successful RRC connection establishments), a number of failed RRC connection establishments (Failed RRC connection establishments), a number of RRC connection re-establishment attempts (Number of RRC connection re-establishment attempts), a number of successful RRC connection establishments followed by RRC connection re-establishment attempt (Number of RRC connection re-establishment attempts followed by RRC Setup), a number of successful RRC connection re-establishments without user equipment (UE) context information (Successful RRC connection re-establishment without UE context), a number of registered subscribers (number of registered subscribers), a number of successful initial registrations (Number of (successful) initial registrations), a number of successful mobility registration update requests (Number of (successful) mobility registration update requests), a number of successful periodic registration update requests (Number of (successful) periodic registration update requests), mean time of registration procedures (Mean time of Registration procedure), a total number of attempted/successful service requests (Total number of attempted/successful service requests), a number of successful 5G paging procedures (Number of (successful) 5G paging procedures), CPU usage of the AMF and a gNodeB, and load of the AMF and the gNodeB.

**Table 2**

| | |
|---|---|
| RAN measurement data | Attempted RRC connection establishments |
| | Successful RRC connection establishments |
| | Failed RRC connection establishments |
| | Number of RRC connection re-establishment attempts |
| | Number of RRC connection re-establishment attempts followed by RRC Setup |
| | Successful RRC connection re-establishment without UE context |
| AMF performance measurement statistics | number of registered subscribers: |
| | Number of (successful) initial registrations |
| | Number of (successful) mobility registration update requests |
| | Number of (successful) periodic registration update requests |
| | Mean time of Registration procedure |
| | Total number of attempted/successful service requests |
| | Number of (successful) 5G paging procedures |
| NF CPU usage | CPU usage of an AMF and a gNodeB |
| NF load | Load of the AMF and the gNodeB |

Case 3: The target network element does not include the first network element.

For example, the target network element is an SMF network element, and the NWDAF network element may obtain first information from a second network element. The first information includes a type of a message that is received by the SMF network element and/or a total number of messages that are received by the SMF network element, and/or a type of a message that is sent by the SMF network element and/or the total number of messages that are sent by the SMF network element. In addition, the NWDAF network element may obtain second information from a third network element. The second information includes at least one of an instance identifier of the SMF network element, signaling statistical measurement, CPU usage of the SMF network element and a fourth network element, or load of the SMF network element and the fourth network element. The second network element may be, for example, an AMF network element, the third network element may be, for example, an OAM network element, and the fourth network element may be, for example, a UDM network element or a PCF network element. Further, the NWDAF network element may determine the foregoing first response based on the first information and the second information. For example, the NWDAF network element may determine, based on the total number of messages that are received by the SMF network element, the load of the SMF network element, and load of the PCF network element, whether the SMF network element or the PCF network element has a risk of congestion or a network signaling storm.

In the foregoing S302, that the NWDAF network element sends the first response to the first network element includes but is not limited to the following cases.

Case 1: The foregoing first request includes the foregoing first time window, and the NWDAF network element performs, based on duration corresponding to the first time window, a statistical analysis on the message that is received by the target network element and/or the message that is sent by the target network element, and periodically sends the first response to the first network element based on a preset periodicity. The duration corresponding to the first time window is greater than or equal to duration corresponding to the preset periodicity.

For example, if the duration corresponding to the foregoing first time window is 30 minutes, the NWDAF network element performs, every 30 minutes, a statistical analysis on the message that is received by the target network element and/or the message that is sent by the target network element, and sends the first response once to the first network element every 30 minutes.

For another example, if the duration corresponding to the foregoing first time window is 30 minutes, the NWDAF network element performs, every 30 minutes, a statistical analysis on the message that is received by the target network element and/or the message that is sent by the target network element, and sends the first response once to the first network element every 29 minutes.

Case 2: The foregoing first request includes the first condition, and the NWDAF may send the first response to the first network element when the first condition is met.

For example, the NWDAF network element may send the first response to the first network element when a total number of messages that are received by the target network element in unit time or in the first time window is greater than 1,000.

For another example, the NWDAF network element may send the first response to the first network element when a failure rate of the request message is greater than 80%.

For another example, the NWDAF network element may send the first response to the first network element when the first reason why the request message fails is a network fault or that the UE is invalid.

For another example, the NWDAF network element may send the first response to the first network element when a number of request messages that fail due to a network fault is greater than 100.

For another example, the NWDAF network element may send the first response to the first network element when a total number of rejection messages that are sent by the target network element and that are corresponding to the first message type is greater than 100.

For another example, the NWDAF network element may send the first response to the first network element when a failure rate of the request message is greater than 80% and a reason of a signaling request failure is a network fault or that the UE is invalid.

Case 3: The foregoing first request includes the first time window and the first condition. Correspondingly, when the first condition is met, the NWDAF may send the first response to the first network element based on the preset periodicity. Duration corresponding to the first time window is greater than or equal to duration corresponding to a specific periodicity.

For example, if the duration corresponding to the first time window is 30 minutes, and the preset periodicity is 20 minutes, when the first condition is met, the NWDAF network element sends the first response once to the first network element every 20 minutes.

Further, after receiving the first response, the first network element may perform a first operation based on the first response. The first operation is used to prevent a network signaling storm. It can be learned from the foregoing descriptions that the first network element may be any one of the following: an AMF network element, an OAM network element, an NRF network element, a PCF network element, or an AF network element. Different first network elements perform different first operations. The following provides descriptions based on cases.

Case 1: The first network element is the AMF network element.

When the first network element is the AMF network element, the AMF network element may adjust a flow control policy of the AMF network element based on the first response. The flow control policy includes one or more of the following: adjusting a number of AMFs that perform signaling exchange with a radio access device NG-RAN in an AMF pool, adjusting a proportion of rejection messages that are sent by the AMF network element, adjusting a value of a backoff timer carried in the rejection message that is returned by the AMF network element, or adjusting a number of messages that are sent by each NG-RAN to the AMF network element. In this way, the AMF network element adjusts the flow control policy of the AMF network element based on the first response. This can effectively prevent a network signaling storm, so as to effectively improve reliability of the communication network.

For example, if the foregoing first response indicates that request messages that are received by the current AMF in unit time or in the first time window exceed 5,000, the request messages that are received by the current AMF exceed a processing capability of the current AMF, and the current AMF network element may increase a number of AMFs that perform signaling exchange with the radio access device NG-RAN in the AMF pool. In this way, more AMF network elements in the AMF pool can provide a signaling processing capability, thereby enhancing network reliability.

For another example, if the foregoing first response indicates that request messages that are rejected by the AMF exceed 1,000, a proportion of rejection messages that are returned by the AMF network element may be reduced, and the value of the backoff timer carried in the rejection message that is returned by the AMF network element may be reduced. In this way, UEs in an access network can be reduced, so that the UEs can access the access network in batches, thereby reducing signaling overheads of the network, and preventing a network signaling storm caused by frequent request messages initiated by the UE.

For another example, if the foregoing first response indicates that request messages that are received by the current AMF in unit time or in the first time window exceed 1,000, the number of messages that are sent by each NG-RAN to the AMF network element may be reduced. In this way, a number of request messages that are to be received by the AMF network element can be reduced. This can effectively prevent a network signaling storm, so as to effectively improve reliability of the communication network.

Case 2: The first network element is the OAM network element.

When the first network element is the OAM network element, the OAM network element may adjust a network configuration based on the first response. Network configuration adjustment includes at least one or more of the following: a flow control threshold configured for a network element in a wireless communication network, adjusting a number of AMFs in an AMF pool, adjusting a number of devices with a processing capability bottleneck in a network, or adjusting a routing policy. In this way, the OAM network element adjusts the network configuration based on the first response. This can effectively prevent a network signaling storm, so as to effectively improve reliability of the communication network.

For example, when the foregoing first response indicates that request messages that are received by the current target network element AMF in unit time or in the first time window exceed 5,000, the OAM network element may reduce a flow control threshold configured for network elements such as an AMF network element, an SMF network element, and a UDM network element, so that a number of signaling that is received by the AMF network element and the SMF network element is reduced. This can effectively prevent a network signaling storm, so as to effectively improve reliability of the communication network.

For another example, when the foregoing first response indicates that request messages that are received by the current target network element AMF in unit time or in the first time window exceed 5,000, the OAM network element may increase the number of AMFs in the AMF pool, thereby improving a signaling processing capability in the network.

For another example, when the foregoing first response indicates that request messages that are received by the current target network element AMF in unit time or in the first time window exceed 5,000, the OAM network element may adjust the number of devices with the processing capability bottleneck in a network, for example, add a signaling transfer point device DRA.

For another example, when the foregoing first response indicates that request messages that are received by the current target network element AMF in unit time or in the first time window exceed 5,000, the OAM network element may adjust routes from an AMF and an SMF to the DRA, thereby improving a signaling processing capability in the network.

Case 3: The first network element is the NRF network element.

When the first network element is the network repository function NRF network element, the NRF network element may adjust a priority of the target network element based on the first response. The priority of the target network element is reference information used when the NRF network element selects the target network element. In this way, the NRF network element can adjust the priority of the target network element based on the first response, so that the NRF network element selects the target network element with reference to the priority, and a network element selected by the NRF network element does not cause network congestion. This can prevent a signaling storm caused by signaling congestion of the network element, so as to effectively improve reliability of the communication network.

For example, the target network element is an SMF. When the foregoing first response indicates that the current AMF receives a PDU session request message of the UE, the AMF sends a network element selection request to the NRF network element, to request the NRF to allocate an appropriate SMF to the PDU session request. The NRF selects a high-priority SMF, and the NRF does not select the target network element. In this way, congestion of the target network element can be alleviated, thereby preventing a network signaling storm.

Case 4: The first network element is the PCF network element.

When the first network element is the policy control function PCF network element, the PCF network element may adjust, based on the first response, a UE route selection policy (UE Route Selection Policy, URSP) for UE data transfer or a future background data transfer (background data transfer, BDT) policy. In this way, the UE can avoid a network element to which a request message is rejected, thereby effectively avoiding network congestion aggravation caused by the UE data transfer and future background data transfer. This can prevent a network signaling storm, so as to effectively improve reliability of the communication network.

For example, if the foregoing first response indicates that a proportion of failed requests to the request messages that are received by the AMF is 70%, the PCF network element may avoid the AMF network element by using the URSP or the future BDT transfer policy.

Case 5: The first network element is the AF network element.

When the first network element is the AF network element, the AF network element may adjust, based on the first response, a policy of initiating a service request by the AF network element. The policy of the service request includes time and/or a frequency of initiating the service request by the AF.

For example, if the foregoing first response indicates that a proportion of failed requests to request messages that are initiated by the AF is 70%, duration and/or the frequency of initiating the service request by the AF are/is reduced. This can prevent network congestion aggravation caused by the request of the AF, and prevent generation or diffusion of the network signaling storm, so as to effectively improve the network reliability.

FIG. 4 is a diagram of a structure of a communication apparatus according to an embodiment of this application. As shown in FIG. 4, a communication apparatus 400 includes a transceiver unit 401. The communication apparatus 400 may be a hardware device, a component in the hardware device, a software module in the hardware device, or the like. The communication apparatus 400 may be configured to implement functions of the NWDAF network element described above.

The transceiver unit 401 is configured to receive a first request from a first network element, where the first request includes a first identifier of a target network element. The transceiver unit 401 sends a first response to the first network element, where the first response includes analytics information of a message that is received by the target network element and/or analytics information of a message that is sent by the target network element.

In a possible design, the communication apparatus 400 further includes a processing unit 402, and the processing unit 402 is further configured to: obtain first information from a second network element, where the first information includes a type of the message that is received by the target network element and/or the total number of messages that are received by the target network element, and/or a type of the message that is sent by the target network element and/or the total number of messages that are sent by the target network element; and determine the first response based on the first information.

In a possible design, the processing unit 402 is further configured to obtain second information from a third network element, where the second information includes at least one of an instance identifier of the target network element, signaling statistical measurement, CPU usage of the target network element and/or a fourth network element, or load of the target network element and/or the fourth network element. In addition, the processing unit 402 is specifically configured to determine the first response based on the first information and the second information.

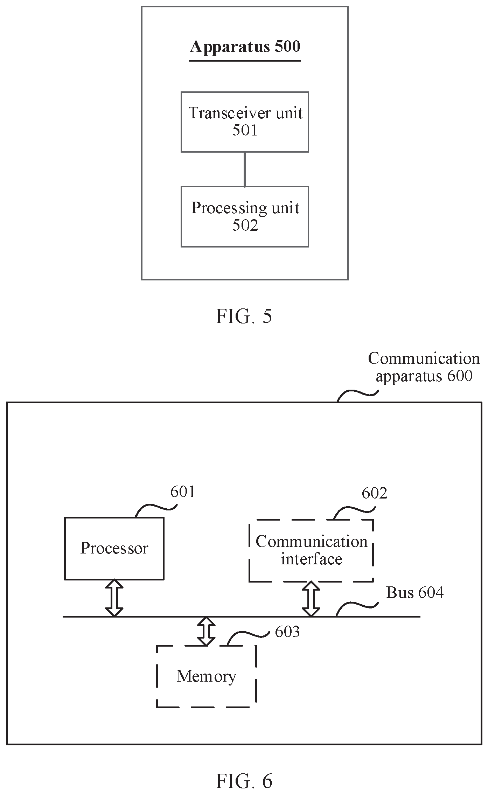

FIG. 5 is a diagram of a structure of a communication apparatus according to an embodiment of this application. As shown in FIG. 5, a communication apparatus 500 includes a transceiver unit 501. The communication apparatus 500 may be a hardware device, a component in the hardware device, a software module in the hardware device, or the like. The communication apparatus 500 may be configured to implement functions of the first network element described above.

The transceiver unit 501 is configured to send a first request to a network data analytics function network element, where the first request includes a first identifier of a target network element. The transceiver unit 501 is configured to receive a first response from the network data analytics function network element, where the first response includes analytics information of a message that is received by the target network element and/or analytics information of a message that is sent by the target network element.

In a possible design, the communication apparatus 500 further includes a processing unit 502. When the first network element is an AMF network element, the processing unit 502 is further configured to adjust a flow control policy of the AMF network element based on the first response. The flow control policy includes one or more of the following: adjusting a number of AMFs that perform signaling exchange with a radio access device NG-RAN in an AMF pool, adjusting a proportion of rejection messages that are returned by the AMF network element, adjusting a value of a backoff timer carried in the rejection message that is returned by the AMF network element, or adjusting a number of messages that are sent by each NG-RAN to the AMF network element.

In a possible design, the communication apparatus 500 further includes a processing unit 502. When the first network element is an OAM network element, the processing unit 502 is further configured to adjust a network configuration based on the first response. The network configuration includes at least one or more of the following: a flow control threshold configured for each network element in a wireless communication network, adjusting a number of AMFs in the AMF pool, adjusting a number of devices with a processing capability bottleneck in a network, or adjusting a routing policy.

In a possible design, the communication apparatus 500 further includes a processing unit 502. When the first network element is an NRF network element, the processing unit 502 is further configured to adjust a priority of the target network element based on the first response. The priority of the target network element is reference information used when the NRF network element selects the target network element.

In a possible design, the communication apparatus 500 further includes a processing unit 502. When the first network element is a PCF network element, the processing unit 502 is further configured to adjust a UE route selection policy URSP for data transfer or a future background data transfer policy based on the first response.

In a possible design, the communication apparatus 500 further includes a processing unit 502. When the first network element is an AF network element, the processing unit 502 is further configured to adjust, based on the first response, a policy of initiating a service request by the AF. The policy of the service request includes time and/or a frequency of initiating the service request by the AF.

FIG. 6 is a diagram of a structure of a communication apparatus according to an embodiment of this application.

As shown in FIG. 6, a communication apparatus 600 includes a processor 601 and a communication interface 602. The processor 601 and the communication interface 602 are coupled to each other, or are designed independently. The communication interface 602 may be, for example, a transceiver or an input/output interface. The processor 601 and the communication interface 602 may implement the foregoing method.

Optionally, the communication apparatus 600 may further include a memory 603, configured to: store instructions executed by the processor 601, store input data required by the processor 601 to run the instructions, or store data generated after the processor 601 runs the instructions.

Any two of the processor 601, the communication interface 602, and the memory 603 may communicate with each other through a bus 604. The bus 604 may be a peripheral component interconnect (peripheral component interconnect, PCI) bus, an extended industry standard architecture (extended industry standard architecture, EISA) bus, or the like. Buses may be classified into an address bus, a data bus, a control bus, and the like.

It may be understood that, the processor 601 may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or may be any regular processor. The memory 603 may include a volatile memory (volatile memory), for example, a random access memory (random access memory, RAM). The memory may further include a non-volatile memory (non-volatile memory), for example, a read-only memory (read-only memory, ROM), a flash memory, a hard disk drive (hard disk drive, HDD), or a solid state drive (solid state drive, SSD).

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more procedures in the flowcharts and/or in one or more blocks in the block diagrams.

These computer program instructions may alternatively be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the spirit and scope of this application. In this way, this application is intended to cover these modifications and variations of this application provided that they fall within the scope of protection defined by the following claims and their equivalent technologies.

## Claims

1. A communication method, wherein the method comprises:
receiving a first request from a first network element, wherein the first request comprises a first identifier of a target network element; and
sending a first response to the first network element, wherein the first response comprises analytics information of a message that is received by the target network element and/or analytics information of a message that is sent by the target network element.

2. The method according to claim 1, wherein the analytics information of the message that is received by the target network element comprises at least one piece of statistical information.

3. The method according to claim 2, wherein the at least one piece of statistical information comprises a total number of messages that are received by the target network element and/or a total number of messages that are received by the target network element and that are corresponding to a first message type.

4. The method according to claim 3, wherein the at least one piece of statistical information further comprises at least one of the following:
a total number of messages that are received by the target network element in a first time period, a total number of messages that are received by the target network element in the first time period and that are corresponding to the first message type, and a total number of devices that initiate, in the first time period, messages that are of the first message type and whose total number is greater than a first number.

5. The method according to claim 1, wherein the analytics information of the message that is sent by the target network element comprises at least one piece of statistical information.

6. The method according to claim 5, wherein the at least one piece of statistical information comprises a total number of messages that are sent by the target network element and/or a total number of messages that are sent by the target network element and that are corresponding to a first message type.

7. The method according to claim 5 or 6, wherein the at least one piece of statistical information further comprises at least one of the following:
a total number of response messages that are sent by the target network element, a total number of response messages that are sent by the target network element and that are corresponding to the first message type, a reason corresponding to the response message that is sent by the target network element, or a total number of response messages that are sent by the target network element and that are corresponding to a first reason.

8. The method according to any one of claims 1 to 7, wherein the first response further comprises at least one of the following:
a type of the target network element, an instance identifier of the target network element, or CPU usage of the target network element.

9. The method according to any one of claims 1 to 8, wherein the first request further comprises a first condition, and the first condition comprises at least one of the following: a first parameter corresponds to a first value; the first value corresponding to the first parameter is greater than or equal to a first threshold; or the first value corresponding to the first parameter is less than or equal to the first threshold; and
the sending the first response to the first network element comprises: when the first condition is met, sending the first response.

10. The method according to any one of claims 1 to 9, wherein the first request further comprises a first time window, the first time window is used to determine a second time period in which the target network element receives a message and/or the target network element sends a message, and the second time period is used to determine time for performing a statistical analysis on the message that is received by the target network element and/or the message that is sent by the target network element.

11. The method according to any one of claims 1 to 10, wherein the method further comprises:
obtaining first information from a second network element, wherein the first information comprises a type of the message that is received by the target network element and/or a total number of messages that are received by the target network element, and/or a type of the message that is sent by the target network element and/or a total number of messages that are sent by the target network element; and
determining the first response based on the first information.

12. The method according to claim 11, wherein the method further comprises:
obtaining second information from a third network element, wherein the second information comprises at least one of an instance identifier of the target network element, signaling statistical measurement, CPU usage of the target network element and/or CPU usage of a fourth network element, or load of the target network element and/or the fourth network element; and the fourth network element is a network element that exchanges information with the target network element; and
the determining the first response based on the first information comprises: determining the first response based on the first information and the second information.

13. The method according to any one of claims 1 to 12, wherein the first network element is any one of the following:
a mobility management function AMF network element, an operations administration management OAM network element, a network repository function NRF network element, a policy control function PCF network element, or an application function AF network element.

14. A communication method, wherein the method comprises:
sending a first request to a network data analytics function network element, wherein the first request comprises a first identifier of a target network element; and
receiving a first response from the network data analytics function network element, wherein the first response comprises analytics information of a message that is received by the target network element and/or analytics information of a message that is sent by the target network element.

15. The method according to claim 14, wherein the analytics information of the message that is received by the target network element comprises at least one piece of statistical information.

16. The method according to claim 15, wherein the at least one piece of statistical information comprises a total number of messages that are received by the target network element and/or a total number of messages that are received by the target network element and that are corresponding to a first message type.

17. The method according to claim 16, wherein the at least one piece of statistical information further comprises at least one of the following:
a total number of messages that are received by the target network element in a first time period, a total number of messages that are received by the target network element in the first time period and that are corresponding to the first message type, and a total number of devices that initiate, in the first time period, messages that are of the first message type and whose total number is greater than a first number.

18. The method according to claim 14, wherein the analytics information of the message that is sent by the target network element comprises at least one piece of statistical information.

19. The method according to claim 18, wherein the at least one piece of statistical information comprises a total number of messages that are sent by the target network element and/or a total number of messages that are sent by the target network element and that are corresponding to a first message type.

20. The method according to claim 18 or 19, wherein the at least one piece of statistical information further comprises at least one of the following:
a total number of response messages that are sent by the target network element, a total number of response messages that are sent by the target network element and that are corresponding to the first message type, a reason corresponding to the response message that is sent by the target network element, or a total number of response messages that are sent by the target network element and that are corresponding to a first reason.

21. The method according to any one of claims 14 to 20, wherein the first response further comprises at least one of the following:
a type of the target network element, an instance identifier of the target network element, or CPU usage of the target network element.

22. The method according to any one of claims 14 to 21, wherein the first request further comprises a first time window, the first time window is used to determine a second time period in which the target network element receives a message and/or the target network element sends a message, and the second time period is used to determine time for performing a statistical analysis on the message that is received by the target network element and/or the message that is sent by the target network element.

23. The method according to any one of claims 14 to 22, wherein when the first network element is an access and mobility management function AMF network element, the method further comprises:
adjusting a flow control policy of the AMF network element based on the first response,
wherein
the flow control policy comprises one or more of the following: adjusting a number of AMFs that perform signaling exchange with a radio access device NG-RAN in an AMF pool, adjusting a proportion of rejection messages that are returned by the AMF network element, adjusting a value of a backoff timer carried in the rejection message that is returned by the AMF network element, or adjusting a number of messages that are sent by each NG-RAN to the AMF network element.

24. The method according to any one of claims 14 to 22, wherein when the first network element is an operations administration management OAM network element, the method further comprises:
adjusting a network configuration based on the first response, wherein
the adjusting the network configuration comprises at least one or more of the following: adjusting a flow control threshold configured for each network element in a wireless communication network, adjusting a number of AMFs in an AMF pool, adjusting a number of devices with a processing capability bottleneck in a network, or adjusting a routing policy.

25. The method according to any one of claims 14 to 22, wherein when the first network element is a network repository function NRF network element, the method further comprises:
adjusting a priority of the target network element based on the first response, wherein the priority of the target network element is reference information used when the NRF network element selects the target network element.

26. The method according to any one of claims 14 to 22, wherein when the first network element is a policy control function PCF network element, the method further comprises:
adjusting a UE route selection policy URSP for data transfer or a future background data transfer policy based on the first response.

27. The method according to any one of claims 14 to 22, wherein when the first network element is an application function AF network element, the method further comprises:
adjusting, based on the first response, a policy of initiating a service request by the AF, wherein the policy of the service request comprises time and/or a frequency of initiating the service request by the AF.

28. A communication apparatus, comprising a module or a unit configured to implement the method according to any one of claims 1 to 13.

29. A communication apparatus, comprising a module or a unit configured to implement the method according to any one of claims 14 to 27.

30. A communication apparatus, comprising a processor and a communication interface, wherein the communication interface is configured to receive a signal from an apparatus other than the communication apparatus and transmit the signal to the processor, or send a signal from the processor to an apparatus other than the communication apparatus, and the processor executes code instructions by using a logic circuit to implement the method according to any one of claims 1 to 13, or implement the method according to any one of claims 14 to 27.

31. A communication system, comprising the communication apparatus according to claim 28 and the communication apparatus according to claim 29.

32. A computer-readable storage medium, comprising a program or instructions, wherein when the program or the instructions are run on a computer, the method according to any one of claims 1 to 13 or claims 14 to 27 is performed.

33. A chip system, comprising a processor, wherein the processor is coupled to a memory, and is configured to read and execute program instructions stored in the memory, to implement the method according to any one of claims 1 to 13 or claims 14 to 27.
